# EUROPEAN PATENT SPECIFICATION

(11) **EP 2 255 704 B1**
(45) Date of publication and mention of the grant of the patent: **09.11.2011**
(21) Application number: 10163728.8
(22) Date of filing: 25.05.2010
(51) Int. Cl.: A47J 31/54, H05B 1/02

(54) **A circuit and control method for the self shutoff particularly of a coffee machine**
Schaltkreis und Steuerverfahren zur Selbstausschaltung, insbesondere für eine Kaffeemaschine
Circuit et procédé de commande pour l'arrêt automatique, particulièrement d'une machine à café

(30) Priority: 25.05.2009 IT MI20090922
(43) Date of publication of application: 01.12.2010
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- EP-A1- 0 362 954
- EP-A1- 0 427 666
- DE-A1- 2 635 848
- DE-A1- 4 445 207
- US-A- 3 784 788
- US-A- 5 001 969

## Description

The present invention relates to a control circuit for the self shutoff particularly of a coffee machine, and more precisely of coffee machine having a manual charging of the dose of coffee in a traditionally electro-mechanic small cup. Such coffee machines presently do not have generally a control circuit having an automatic shutoff function.

Also a control circuit can be provided, which when the machine is on and ready to use and waits for the operator selecting a function of the machine (supply of coffee, supply of steam, and so on), and after a certain non-used time is elapsed, controls the automatic shutoff.

But in this case the controller is operating with a very high voltage (typically 230 v), as he must react, by an appropriate commutator, to both phases of the power line which supplies the machine.

This results in a possible functional and structural complication of the circuit block which implements the function of automatic shutoff of the machine.

DE 4 445 207, DE 2 635 848, EP 0 362 954 and EP 0 427 666 disclose a control circuit for the self switch-off particularly of a coffee machine according to the preamble of claim 1.

The technical aim which is proposed by the present invention is, therefore, to realize control circuit for the automatic shutoff particularly of a coffee machine, which permits to eliminate the technical drawbacks lamented by the known art.

Within such technical aim, a scope of the invention is to realize a control circuit for the self shutoff particularly of a coffee machine, which implements in an extremely simple and economic way the function of automatic shutoff of the machine. The technical aim, and also these and other aims, are reached according to the present invention by realizing a control circuit for the self shutoff particularly of a coffee machine, according to claim 1.

Advantageously, the controller can react to only one of the phases of the power line and therefore can work with a voltage also extremely low. This permits to turn to a simple and reliable electronic card for implementing the function of automatic shutoff of the machine.

The present invention reveals also a control method for the self shutoff of a coffee machine, according to claim 8.

Other characteristics of the present invention are further defined in the subsequent claims.

Other characteristics and advantages of the invention will result more evident from the description of a preferred but non exclusive embodiment of the control circuit for the self shutoff of a coffee machine according to the finding, shown in an indicative and non-limitative way in the annexed drawings, in which:

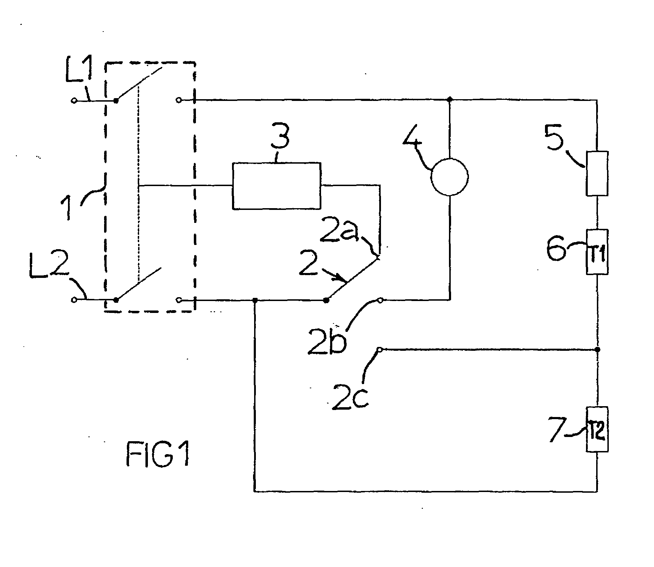

figure 1 shows schematically the control circuit for the self shutoff of an automatic coffee machine according to the invention.

The control circuit comprises a power line having a first phase L1 and at least a second phase L2, and a general power switch 1.

The control circuit also comprises a commutator 2 for shifting a single phase chosen between L1 and L2, particularly the second phase L2.

The commutator 2 has a first position 2a in which a controller 3 of the general power switch (1) is supplied for the automatic shutoff of the machine at reaching a predetermined condition of the machine, and at least a second position 2b, in which a first actuating circuit of a first characteristic function of the machine is supplied. In particular, the commutator 2 has at least also a third position 2c in which at least a second circuit for actuating a second characteristic function of the machine is supplied.

The controller 3 comprises advantageously an electronic card which has a low working voltage, generally not higher than 10 V, typically of 5 V. Between the first phase L1 and the second phase L2 è by-pass circuit of the commutator 2 is provided. The by-pass circuit of the commutator 2 comprises in cascade a boiler 5, a first control thermostat 6 of the boiler 5 set with a first temperature T1, and a second control thermostat 7 of the boiler 5 set with a second temperature T2 lower than the first temperature T1.

The first actuation circuit comprises a pump 4 disposed between the commutator 2 and the first phase L1.

The second actuation circuit comprises a by-pass circuit 9 of the second thermostat 7.

The by-pass circuit 9 of the second thermostat 7 is an electric conductor extending between the commutator 2 and a point of the by-pass circuit of the commutator 2 interposed between the first thermostat 6 and the second thermostat 7.

The function of the control circuit is the following.

The operator switches on the machine by lowering a button which causes the closing of the general power switch 1.

The commutator is initially in the position 2a.

The switching on of the machine determines therefore both the supply of the controller 3 and the supply of the by-pass circuit of the commutator 2.

This situation corresponds to the ready-to-use state of the machine, waiting for the operator selecting a characteristic function.

The boiler 5 present in the by-pass circuit of the commutator 2 is actuated by bringing the infusion water to around the temperature T2 by means of the control of the second thermostat 7.

The controller 3 has a timer and carries in memory a threshold value for the waiting time before the operator selects a characteristic function of the machine.

The predetermined state of the machine in which the controller 3 actuates the shutoff is reached when the limit waiting time is elapsed in the ready-to-use state of the machine.

The controller 3 controls automatically the shut off of the machine by driving, through an electromagnet (not shown) the general power switch 1.

Within the threshold value of the waiting time the operator can select, by means of an appropriate actuating lever of the commutator 2, the first characteristic function of the machine, consisting for istance in the production of a dose of coffee. The commutator commutes from the position 2a to the position 2b in which the first actuating circuit of the first function of the machine is supplied.

The pump 4 doses in the infusion chamber of the machine the water maintained in the boiler 5 at around the temperature T2, for instance 95°C, by means of the control of the second thermostat 7. Within the threshold value of the waiting time the operator can alternatively select, through the actuation button of the commutator 2, the second characteristic function of the machine, consisting in the production of steam, for instance for warming milk or water present in a cup.

The commutator commutes in this case from the position 2a to the position 2c in which the second actuation control of the second function of the machine is supplied.

In this situation the second thermostat 7 is shortcircuited by the by-pass circuit 9 and the water temperature in the boiler is brought to around the value T1, for instance 125°C, by means of the control of the first thermostat 5.

The extremely advantageous aspect of the present invention consists in that by utilizing the commutator as described in the scheme of the control circuit, it is possible to detect the state of the ready-to-use machine, only in function of how a single phase of the power line is shifted. Naturally, even if in the case shown the commutator shifts the phase L2, indifferently L1 or L2 can be the single phase shifted by the commutator.

This solution, in which the controller works referring only to one of the phases L1, L2 of the power line, permits to provide for an electronic card which works at a low voltage to implement the function of automatic shutoff of the machine.

The control method of the coffee machine, following which was previously described, consists in shifting a single phase of the power line in order to commute the machine between any of its characteristic functions and a ready-to-use state of the machine in which the controller 3 is supplied for the automatic shutoff of the machine at reaching of a threshold value for the permanence time of the machine in the ready-to-use state of the machine.

## Claims

1. A control circuit for the self switch-off particularly of a coffee machine, comprising a power line with a first phase (L1) and at least a second phase (L2), and a general power switch (1), a commutator (2) for shifting a single phase (L2) chosen between said first phase (L1) and said second phase (L2), said commutator (2)having a first position (2a) in which a controller (3) of said general power switch (1) is powered for the automatic switching-off of said machine at reaching of a predetermined condition of said machine, and at least a second position (2b), in which a first actuating circuit of a first characteristic function of said machine is powered,
**characterized in that** said controller (3) comprises an electronic card operating with working tensions not more than 10 V.

2. The control circuit for the self switch-off particularly of a coffee machine according to claim 1, **characterized in that** said commutator has at least a third position (2c) in which a second circuit for actuating a second characteristic function of said machine is powered.

3. The control circuit for the self switch-off particularly of a coffee machine according to one or more preceding claims, **characterized in that** between said first phase (L1) and said second phase (L2) a bypass circuit of said commutator (2) is provided, comprising in cascade a boiler (5), a first control thermostat (6) for said boiler (5) set with a first temperature (T1) and a second control thermostat (7) for said boiler (5) set with a second temperature (T2) lower than said first temperature (T2).

4. The control circuit for the self switch-off particularly of a coffee machine according to one or more preceding claims, **characterized in that** said first characteristic function is the production of the infusion of coffee and said first actuating circuit comprises a pump (4) disposed between said commutator (2) and said first phase (L1).

5. The control circuit for the self switch-off particularly of a coffee machine according to one or more preceding claims, **characterized in that** said second characteristic function is the production of steam and said second actuating circuit comprises a bypass circuit of said second thermostat (7).

6. A method for the control of a coffee machine of the kind comprising a power line with a first phase (L1) and at least a second phase (L2), and a general power switch (1), **characterized in that** it shifts a single phase (L2) chosen between said first phase (L1) and said second phase (L2) in order to commutate said machine between each of its characteristic functions and a ready-to-use state of the machine, in which a controller (3) of said general power switch (1) is powered for automatically switching-off said machine at reaching a threshold value for the time of permanence of said machine in said ready-to-use state of the machine.

7. Coffee machine **characterized in that** it comprises a control circuit according to one or more preceding claims.

## Patentansprüche

1. Steuerschaltkreis zur Selbstabschaltung, insbesondere einer Kaffeemaschine, umfassend eine Netzleitung mit einer ersten Phase (L1) und mindestens einer zweiten Phase (L2), sowie einen Hauptnetzschalter (1), einen Kommutator (2) zum Verschieben einer einzelnen gewählten Phase (L2) zwischen der ersten Phase (L1) und der zweiten Phase (L2), wobei der Kommutator (2) eine erste Position (2a), in der ein Regler (3) des Hauptnetzschalters (1) beim Erreichen eines festgelegten Zustands der Maschine zum automatischen Abschalten der Maschine mit Energie versorgt wird, sowie mindestens eine zweite Position (2b) aufweist, in der ein erster Betätigungsschaltkreis einer ersten typischen Funktion der Maschine mit Energie versorgt wird, **dadurch gekennzeichnet, dass** der Regler (3) eine elektronische Karte umfasst, die mit Arbeitsspannungen von nicht mehr als 10 V arbeitet.

2. Steuerschaltkreis zur Selbstabschaltung, insbesondere einer Kaffeemaschine, nach Anspruch 1, **dadurch gekennzeichnet, dass** der Kommutator mindestens eine dritte Position (2c) aufweist, in der ein zweiter Schaltkreis zur Betätigung einer zweiten typischen Funktion der Maschine mit Energie versorgt wird.

3. Steuerschaltkreis zur Selbstabschaltung, insbesondere einer Kaffeemaschine, nach einem oder mehreren der vorangehenden Ansprüche, **dadurch gekennzeichnet, dass** zwischen der ersten Phase (L1) und der zweiten Phase (L2) ein Bypass-Schaltkreis des Kommutators (2) bereitgestellt ist, umfassend in Reihe einen Kessel (5), ein erstes Steuerthermostat (6) für den Kessel (5), das mit einer ersten Temperatur (T1) eingestellt ist und ein zweites Steuerthermostat (7) für den Kessel (5), das mit einer zweiten Temperatur (T2) eingestellt ist, die niedriger als die erste Temperatur (T1) ist.

4. Steuerschaltkreis zur Selbstabschaltung, insbesondere einer Kaffeemaschine, nach einem oder mehreren der vorangehenden Ansprüche, **dadurch gekennzeichnet, dass** die erste typische Funktion die Erzeugung des Aufgusses von Kaffee ist und der erste Betätigungsschaltkreis eine Pumpe (4) umfasst, die zwischen dem Kommutator (2) und der ersten Phase (L1) angeordnet ist.

5. Steuerschaltkreis zur Selbstabschaltung, insbesondere einer Kaffeemaschine, nach einem oder mehreren der vorangehenden Ansprüche, **dadurch gekennzeichnet, dass** die zweite typische Funktion die Erzeugung von Dampf ist und der zweite Betätigungsschaltkreis einen Bypass-Schaltkreis des zweiten Thermostats (7) umfasst.

6. Verfahren zur Steuerung einer Kaffeemaschine der Art, die eine Netzleitung mit einer ersten Phase (L1) und mindestens einer zweiten Phase (L2) sowie einen Hauptnetzschalter umfasst, **dadurch gekennzeichnet, dass** es eine einzelne gewählte Phase (L2) zwischen der ersten Phase (L1) und der zweiten Phase (L2) verschiebt, um die Maschine zwischen ihren typischen Funktionen und einem betriebsbereiten Zustand der Maschine zu kommutieren, in welchem ein Regler (3) des Hauptnetzschalters (1) beim Erreichen eines Schwellenwertes für ein automatisches Abschalten der Maschine für die Dauer mit Energie versorgt wird, in der die Maschine im betriebsbereiten Zustand ist.

7. Kaffeemaschine, **dadurch gekennzeichnet, dass** sie einen Steuerschaltkreis nach einem oder mehreren der vorangehenden Ansprüche umfasst.

## Revendications

1. Circuit de commande pour l'arrêt automatique, particulièrement d'une machine à café, comprenant une ligne électrique avec une première phase (L1) et au moins une seconde phase (L2), et un interrupteur général (1), un commutateur (2) pour changer une seule phase (L2) choisie entre ladite première phase (L1) et ladite seconde phase (L2), ledit commutateur (2) ayant une première position (2a) dans laquelle un dispositif de commande (3) dudit interrupteur général (1) est alimenté pour l'arrêt automatique de ladite machine quand ladite machine présente une condition prédéterminée, et au moins une seconde position (2b) dans laquelle un premier circuit d'actionnement d'une première fonction caractéristique de ladite machine est alimenté, **caractérisé en ce que** ledit dispositif de commande (3) comprend une carte électronique fonctionnant sous des tensions de 10 V maximum.

2. Circuit de commande pour l'arrêt automatique, particulièrement d'une machine à café selon la revendication 1, **caractérisé en ce que** ledit commutateur a au moins une troisième position (2c), dans laquelle un second circuit d'actionnement d'une seconde fonction caractéristique de ladite machine est alimenté.

3. Circuit de commande pour l'arrêt automatique, particulièrement d'une machine à café selon l'une ou plusieurs des revendications précédentes, **caractérisé en ce que**, entre ladite première phase (L1) et ladite seconde phase (L2), se trouve un circuit de dérivation dudit commutateur (2), comprenant en cascade une chaudière (5), un premier thermostat de contrôle (6) pour ladite chaudière (5) réglé à une première température (T1), et un second thermostat de contrôle (7) pour ladite chaudière (5) réglé à une seconde température (T2) inférieure à ladite première température (T1).

4. Circuit de commande pour l'arrêt automatique, particulièrement d'une machine à café selon l'une ou plusieurs des revendications précédentes, **caractérisé en ce que** ladite première fonction caractéristique est la production de l'infusion de café, et ledit premier circuit d'actionnement comprend une pompe (4), située entre ledit commutateur (2) et ladite première phase (L1).

5. Circuit de commande pour l'arrêt automatique, particulièrement d'une machine à café selon l'une ou plusieurs des revendications précédentes, **caractérisé en ce que** ladite seconde fonction caractéristique est la production de vapeur, et ledit second circuit d'actionnement comprend un circuit de dérivation dudit second thermostat (7).

6. Procédé de commande d'une machine à café du type comprenant une ligne électrique avec une première phase (L1) et au moins une seconde phase (L2), et un interrupteur général (1), **caractérisé en ce qu'**il change une seule phase (L2) choisie entre ladite première phase (L1) et ladite seconde phase (L2), de sorte à faire passer ladite machine de chacune de ses fonctions caractéristiques à un état de prêt à l'emploi de la machine, dans lequel un dispositif de commande (3) dudit interrupteur général (1) est alimenté pour arrêter automatiquement ladite machine quand une valeur seuil est atteinte pendant le temps de permanence de ladite machine dans ledit état de prêt à l'emploi de la machine.

7. Machine à café **caractérisée en ce qu'**elle comprend un circuit de commande selon l'une ou plusieurs des revendications précédentes.
